# EUROPEAN PATENT SPECIFICATION

(11) **EP 2 492 524 B1**
(45) Date of publication and mention of the grant of the patent: **11.09.2013**
(21) Application number: 12155460.4
(22) Date of filing: 14.02.2012
(51) Int. Cl.: F16C 1/26

(54) **Brake cable sheath for bicycle**
Bremskabelhülle für Fahrrad
Gaine de câble de frein pour bicyclette

(30) Priority: 22.02.2011 TW 100105723
(43) Date of publication of application: 29.08.2012
(73) Proprietor: Wen, Yuan-Hung, Hemei Town Chang hua (TW)
(72) Inventor: Wen, Yuan-Hung, Hemei Town Chang hua (TW)
(74) Representative: Lang, Christian

(56) References cited:
- DE-U1- 20 104 226
- DE-U1-202007 014 664
- US-A1- 2009 235 774

## Description

### BACKGROUND OF THE INVENTION

### Field of the Invention

The present invention relates to a sheath which is provided for brake cable to be received therein.

### Description of the Prior Art

Brake cable sheath is provided for brake cable or the like to be received therein so as to protect the cable or the user.

Conventional cable sheath, as shown in US 6,250,175 or US 7,784,376, includes plural tubes which are serially arranged. The cable, which includes a plastic tube and a metal wire received in the plastic tube, is received in the tubes of the cable sheath.

However, the cable sheath and the cable would shake arbitrarily after they are assembled on a bicycle. The plastic tube of the cable would probably be produced with a residual stress. The wire of the cable and the cable sheath would be bent by the plastic tube together. Secondly, the wire would be pull to move in the plastic tube. The plastic tube and the cable sheath would be bent also. That is, the cable and the cable sheath can be hardly kept at a determined position static.

Document DE 20 2007 014 664 U1 describes a cable sheath comprising plural tubes, which are serially arranged, with a circular flange at one end fitting to a circular indentation on the other end of the neighboring tube. While this stabilizes the position, the tube structure is complex. Moreover, neighboring tubes can be separated, if a bending force is applied and the stabilization effect is limited due to the clearance the flange-indentation arrangement must have to allow limited bending.

The present invention is, therefore, arisen to obviate or at least mitigate the above mentioned disadvantages.

### SUNINIARY OF THE INVENTION

The main object of the present invention is to provide a brake cable sheath for bicycle which is able to hold the brake cable at a predetermined position static.

To achieve the above and other objects, a brake cable sheath for bicycle of the present invention includes plural tubes. Each tube has a first end, a second end, an outer surface, and an inner surface. The inner surface defines a penetrating hole. The penetrating hole extends axially from the first end to the second end. The second end of each tube is adapted for the first end of another tube to abut thereagainst, so that the tubes are serially arranged.

Each tube is formed with at least two fixation holes and at least two slots. Each fixation hole extends axially. Each fixation hole has a first opening and a second opening. Each slot is dented radially from the outer surface. The slots respectively communicate with one of the fixation holes. The slots respectively extend from the corresponding first opening to the corresponding second opening, so that each fixation hole is adapted for a wire to be radially received therein via the corresponding slot.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

FIG. 1 is a stereogram showing a tube of a first embodiment of the present invention;
FIG. 2 is a cross sectional drawing showing a tube of a first embodiment of the present invention;
FIG. 3 is a stereogram showing a handle of a first embodiment of the present invention;
FIG. 4 is a combination drawing showing a first embodiment of the present invention;
FIG. 5 is a cross sectional drawing showing a first embodiment of the present invention;
FIG. 6 is a stereogram showing a tube of a second embodiment of the present invention;
FIG. 7 is a stereogram showing a tube of a third embodiment of the present invention;
FIG. 8 is a cross sectional drawing showing a tube of a third embodiment of the present invention.

### DETAILED DESCRIPTION OF THE PREFERRED EMBODIMENTS

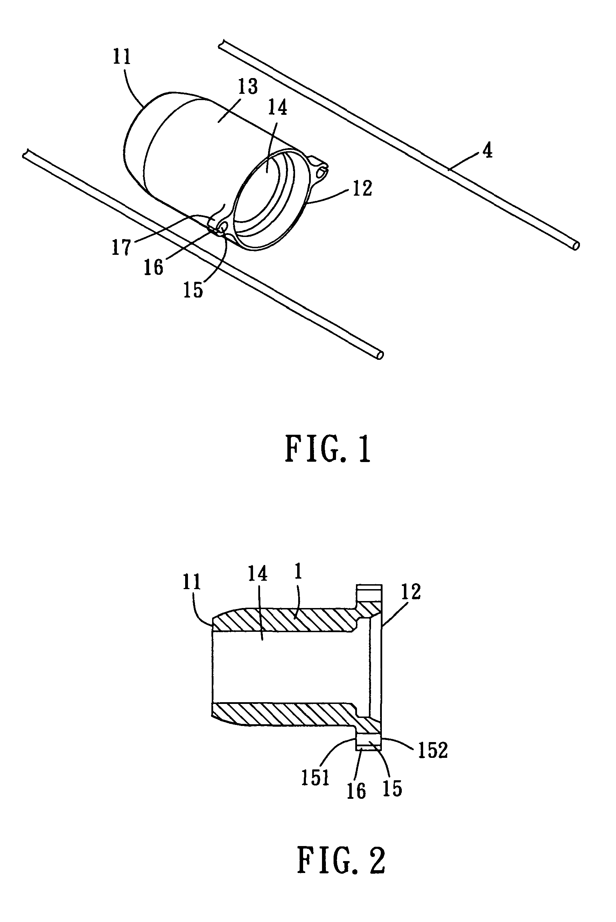

Please refer to FIG. 1 to FIG. 3 for a first embodiment of the present invention. The brake cable sheath of the present embodiment includes a plurality of tubes 1. Each tube 1 has a first end 11, a second end 12, an outer surface 13, and an inner surface 14. A penetrating hole is defined by the inner surface 14. The penetrating hole extends axially from the first end 11 to the second end 12. The second end 12 is provided for the first end of another tube to abut thereagainst. As such, the tubes can be arranged serially.

Each tube 1 is further formed with at least two fixation holes 15 and at least two slots 16. Each fixation hole 15 extends axially. Each fixation hole 15 has a first opening 151 and a second opening 152. Each slot 16 is dented radially from the outer surface 13. The slots 16 communicate respectively with one of the fixation holes 15. The slots 16 extend respectively from the corresponding first opening 151 to the corresponding second opening 152. Preferably, the fixation hole 15 is located by two sides of the penetrating hole. In other words, the penetrating hole is located between the fixation holes 15.

Furthermore, each tube 1 includes a tubular main body and at least two protrusions 17. The protrusions 17 radially protrude from the main body. The fixation holes 15 are respectively located on one of the protrusions 17, and the slots 16 are respectively located on one of the protrusions 17, also.

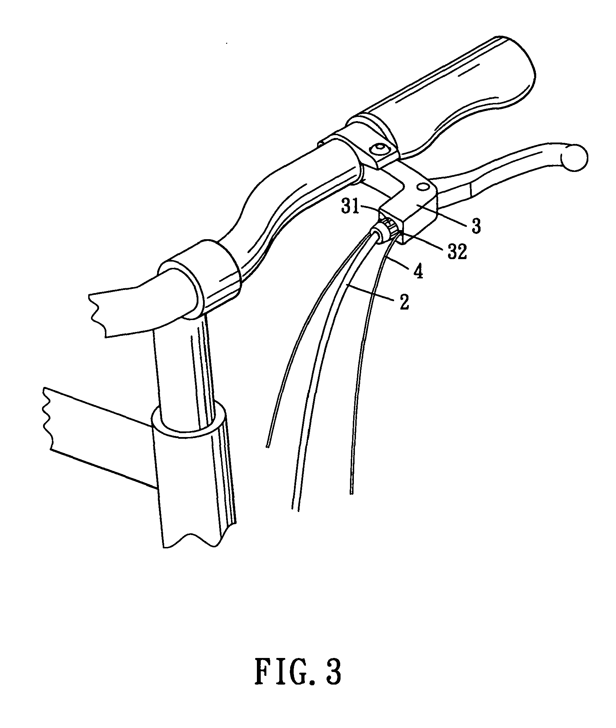

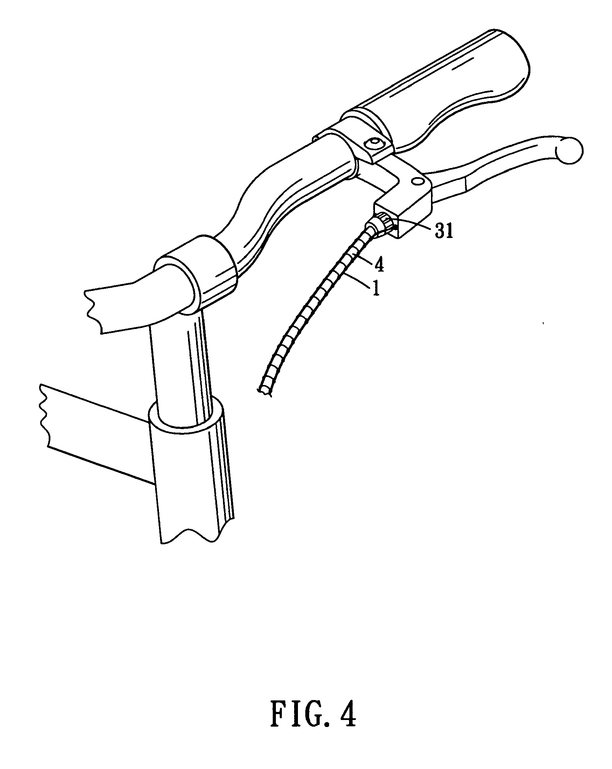

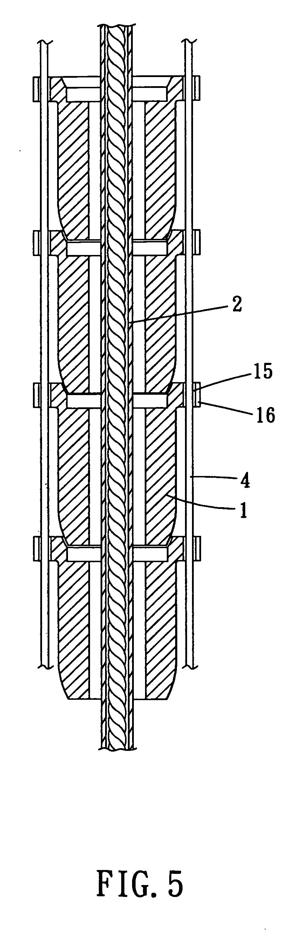

Accordingly, referring to FIG. 3 to FIG. 5, the brake cable sheath of the present embodiment can be put on a brake cable 2 of bicycle so as to be assembled in a brake handle assembly 3. The brake handle assembly includes a handle, a brake cable 2, and at least two wires 4. The brake cable 2 and the wires 3 are disposed on the handle. An adjusting device 31 may be disposed on the handle. The adjusting device 31 is used for pulling the brake cable 2 axially so as to fasten or loosen the brake cable 2. Preferably, the brake cable 2 is located between the wires 4. Other two adjusting devices 32 may be disposed on the handle so as to pull the wires 4 axially, as shown in FIG. 3. In fabrication, the brake cable 2 is received in the penetrating holes of the tubes 1. The wires 4 are then respectively and radially received in the fixation holes 15 via the slots 16. As such, the wires 4 are buckled in the fixation holes 15 via the slots 16. Fabrication by that piercing the ends of the wires 4 into the fixation holes 15 is not necessary. Therefore, easily and quickly fabrication is achieved.

When the fabrication is complete, the wires 4 are arranged by two sides of the brake cable 2. The wires 4 may be tightened to fix the brake cable sheath and the brake cable 2. That is, shaking and bending is reduced so as to keep the brake cable and the brake cable sheath at a predetermined position statically.

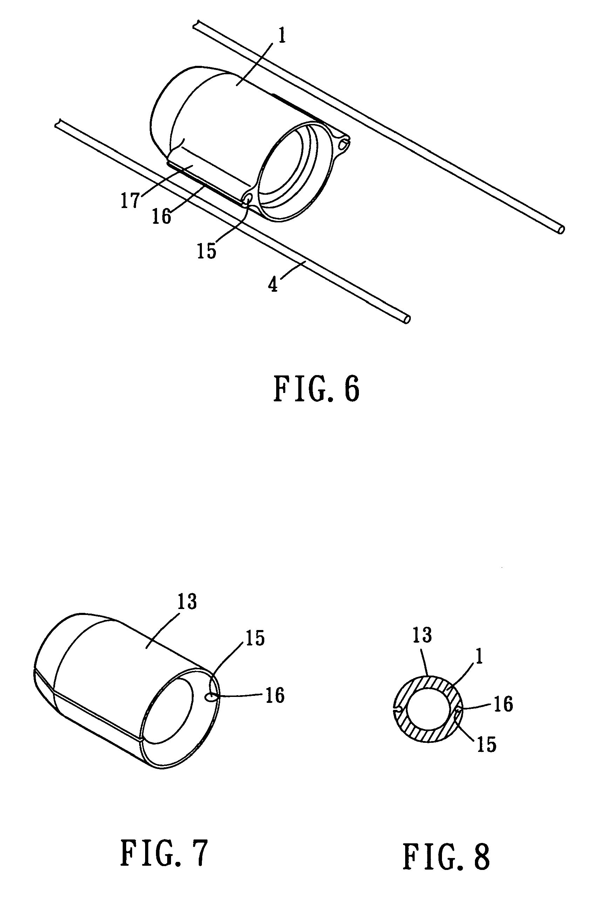

Please refer to FIG. 6. In a second embodiment of the present invention, the protrusions 17 may be axially extended. An axial length of the protrusions 17 may be longer than half of an axial length of the tube 1. Length of the fixation holes 15 is naturally lengthened. As such, the wires 4 could hold the tubes 1 better to reduce the shaking and bending.

Please refer to FIG. 7 and FIG. 8. In a third embodiment of the present invention, the outer surface 13 of each tube 1 may be made a cylindrical surface. Structure strength of the fixation holes 15 and the slots 16 may be strengthened.

In other possible embodiments of the present invention, the quantity of the fixation holes 15, the slots 16, and the wires 4 may be increased for an enhanced stable performance. Preferably, the fixation holes 15, the slots 16, and the wires 4 could be equidistantly arranged around the brake cable 2.

To conclude, the brake cable sheath of the present invention can be assembled with the brake cable so as to cover the brake cable. The brake cable and the user are protected. Further, the brake cable is held by the brake cable sheath and the wires. Shaking and bending of the brake cable is restrained. Otherwise, the slots are provided for wires fabrication. Easily and quickly fabrication is achieved.

## Claims

1. A brake cable sheath for bicycle, comprising plural tubes (1), each tube (1) having a first end (11), a second end (12), an outer surface (13), and an inner surface (14), the inner surface (14) defining a penetrating hole, the penetrating hole extending axially from the first end (11) to the second end (12), the second end (12) of each tube (1) being adapted for the first end of another tube to abut thereagainst, so that the tubes (1) are serially arranged, **characterized in that** each tube (1) is formed with at least two fixation holes (15) and at least two slots (16), each fixation hole (15) extends axially, each fixation hole (15) has a first opening (151) and a second opening (152), each slot (16) is dented radially from the outer surface (13), the slots (16) respectively communicate with one of the fixation holes (15), the slots (16) respectively extend from the corresponding first opening (151) to the corresponding second opening (152), so that each fixation hole (15) is adapted for a wire (4) to be radially received therein via the corresponding slot (16).

2. The brake cable sheath of claim 1, wherein each tube (1) has a tubular main body and at least two protrusions (17), the protrusions (17) radially protrude from the main body, the fixation holes (15) are respectively located on one of the protrusions (17), and the slots (16) are respectively located on one of the protrusions (17).

3. The brake cable sheath of claim 1, wherein the outer surface (13) is a cylindrical surface.

4. The brake cable sheath of claim 1, wherein the penetrating hole is located between the fixation holes (15).

5. The brake cable sheath of claim 2, wherein the penetrating hole is located between the fixation holes (15).

6. The brake cable sheath of claim 3, wherein the penetrating hole is located between the fixation holes (15).

7. A brake handle assembly, comprising the brake cable sheath of claim 1, further comprising a handle, a brake cable (2), and at least two wires (4), the brake cable (2) and the wires (4) being disposed on the handle, the brake cable (2) being located between the wires (4), the brake cable (2) being received in the penetrating holes of the tubes (1), the wires (4) being respectively and radially received in the fixation holes (15) via the slots (16) so as to be buckled in the fixation holes (15).

8. The brake handle assembly of claim 7, wherein each tube (1) has a tubular main body and at least two protrusions (17), the protrusions (17) radially protrude from the main body, the fixation holes (15) are respectively located on one of the protrusions (17), and the slots (16) are respectively located on one of the protrusions (17).

9. The brake handle assembly of claim 7, wherein the outer surface (13) is a cylindrical surface.

10. The brake handle assembly of claim 7, wherein the penetrating hole is located between the fixation holes (15).

11. The brake handle assembly of claim 8, wherein the penetrating hole is located between the fixation holes (15).

12. The brake handle assembly of claim 9, wherein the penetrating hole is located between the fixation holes (15).

## Patentansprüche

1. Bremskabelhülle für Fahrräder, die mehrere Röhren (1) umfasst, wobei jede Röhre (1) ein erstes Ende (11), ein zweites Ende (12), eine äußere Oberfläche (13) und eine innere Oberfläche (14) aufweist, wobei die innere Oberfläche (14) ein Durchgangsloch definiert, wobei sich das Durchgangsloch von dem ersten Ende (11) zu dem zweiten Ende (12) axial erstreckt, wobei das zweite Ende (12) von jeder Röhre (1) darauf ausgelegt ist, dass das erste Ende einer weiteren Röhre an dieses anliegt, so dass die Röhren (1) in Reihe angeordnet sind, **dadurch gekennzeichnet**, das jede Röhre (1) mit mindestens zwei Fixierlöchern (15) und mindestens zwei Schlitzen (16) ausgebildet ist, wobei jedes Fixierloch (15) sich axial erstreckt, wobei jedes Fixierloch (15) eine erste Öffnung (151) und eine zweite Öffnung (152) umfasst, wobei jeder Schlitz (16) von der äußeren Oberfläche (13) her radial eingedrückt ist, wobei die Schlitze (16) jeweils jeweils mit einem der Fixierlöcher (15) in Verbindung stehen, wobei sich die Schlitze (16) jeweils von der entsprechenden ersten Öffnung (151) zu der entsprechenden zweiten Öffnung (152) erstrecken, so dass jedes Fixierloch (15) für einen Draht (4) ausgelegt ist, der darin radial durch den entsprechenden Schlitz (16) aufgenommen wird.

2. Bremskabelhülle nach Anspruch 1, wobei jede Röhre (1) einen röhrenförmigen Hauptkörper und mindestens zwei Vorsprünge (17) aufweist, wobei die Vorsprünge (17) radial von dem Hauptkörper aus hervorstehen, wobei die Fixierlöcher (15) jeweils an einem der Vorsprünge (17) angeordnet sind und wobei die Schlitze (16) jeweils an einem der Vorsprünge (17) angeordnet sind.

3. Bremskabelhülle nach Anspruch 1, wobei die äußere Oberfläche (13) eine zylindrische Oberfläche ist.

4. Bremskabelhülle nach Anspruch 1, wobei das Durchgangsloch zwischen den Fixierlöchern (15) angeordnet ist.

5. Bremskabelhülle nach Anspruch 2, wobei das Durchgangsloch zwischen den Fixierlöchern (15) angeordnet ist.

6. Bremskabelhülle nach Anspruch 3, wobei das Durchgangsloch zwischen den Fixierlöchern (15) angeordnet ist.

7. Bremsgriffanordnung, die die Bremskabelhülle nach Anspruch 1 umfasst und die ferner einen Griff, ein Bremskabel (2) und mindestens zwei Drähte (4) umfasst, wobei das Bremskabel (2) und die Drähte (4) an dem Griff angeordnet sind, wobei das Bremskabel (2) zwischen den Drähten (4) angeordnet ist, wobei das Bremskabel (2) in den Durchgangslöchern der Röhren (1) aufgenommen ist, wobei die Drähte jeweils radial durch die Schlitze (16) in den Fixierlöchern (15) aufgenommen sind, so dass sie in den Fixierlöchern (15) geklemmt sind.

8. Eremsgriffanordnung nach Anspruch 7, wobei jede Röhre (1) einen röhrenförmigen Hauptkörper und mindestens zwei Vorsprünge (17) aufweist, wobei die Vorsprünge (17) radial von dem Hauptkörper aus vorstehen, wobei die Fixierlöcher (15) jeweils an einem der Vorsprünge (17) angeordnet sind und wobei die Schlitze (16) jeweils an einem der Vorsprünge (17) angeordnet sind.

9. Bremsgriffanordnung nach Anspruch 7, wobei die äußere Oberfläche (13) eine zylindrische Oberfläche ist.

10. Bremsgriffanordnung nach Anspruch 7, wobei das Durchgangsloch zwischen den Fixierlöchern (15) angeordnet ist.

11. Bremsgriffanordnung nach Anspruch 8, wobei das Durchgangsloch zwischen den Fixierlöchern (15) angeordnet ist.

12. Bremsgriffanordnung nach Anspruch 9, wobei das Durchgangsloch zwischen den Fixierlöchern (15) angeordnet ist.

## Revendications

1. Gaine de câble de frein pour bicyclette comprenant plusieurs tubes (1), chaque tube (1) ayant une première extrémité (11), une seconde extrémité (12), une surface extérieure (13) et une surface intérieure (14), la surface intérieure (14) définissant un trou pénétrant, le trou pénétrant s'étendant axialement à partir de la première extrémité (11) vers la seconde extrémité (12), la seconde extrémité (12) de chaque tube (11) étant adaptée pour que la première extrémité de fautre tube bute contre celle-ci si bien que les tubes (1) sont arrangés en série, **caractérisée en ce que** chaque tube (1) est formé avec au moins deux trous de fixation (15) et au moins deux fentes (16), chaque trou de fixation (15) s'étend axialement, chaque trou de fixation (15) a une première ouverture (151) et une seconde ouverture (152), chaque fente (16) est dentée radialement à partir de la surface extérieure (13), les fentes (16) communiquant respectivement avec l'un des trous de fixation (15), les fentes (16) s'étendant respectivement à partir de la première ouverture correspondante (151) vers la seconde ouverture correspondante (152) si bien que chaque trou de fixation (15) est adapté pour un fil (4) qui doit y être logé radialement par la fente correspondante (16).

2. Gaine de câble de frein selon la revendication 1, chaque tube (1) ayant un corps principal tubulaire et au moins deux saillies (17), les saillies (17) faisant saillie radialement du corps principal, les trous de fixation (15) étant situés respectivement sur l'une des saillies (17) et les fentes (16) étant situées respectivement sur l'une des saillies (17).

3. Gaine de câble de frein selon la revendication 1, la surface extérieure (13) étant une surface cylindrique.

4. Gaine de câble de frein selon la revendication 1, le trou pénétrant étant situé entre les trous de fixation (15).

5. Gaine de câble de frein selon la revendication 2, le trou pénétrant étant situé entre les trous de fixation (15).

6. Gaine de câble de frein selon la revendication 3, le trou pénétrant étant situé entre les trous de fixation (15).

7. Montage de poignée de frein comprenant la gaine de câble de frein selon la revendication 1 comprenant de plus une poignée, un câble de frein (2) et au moins deux fils (4), le câble de frein (2) et les fils (4) étant disposés sur la poignée, le câble de frein (2) étant situé entre les fils (4), le câble de frein (2) étant logé dans les trous pénétrants des tubes (1), les fils (4) étant logés respectivement et radialement dans les trous de fixation (15) par les fentes (18) de manière à être coincé dans les trous de fixation (15).

8. Montage de poignée de frein selon la revendication 7, chaque tube (1) ayant un corps principal tubulaire et au moins deux saillies (17), les saillies (17) faisant saillie radialement à partir du corps principal, les trous de fixation (15) étant situés respectivement sur l'une des saillies (17) et les fentes (16) étant respectivement situées sur l'une des saillies (17).

9. Montage de poignée de frein selon la revendication 7, la surface extérieure (13) étant une surface cylindrique.

10. Montage de poignée de frein selon la revendication 7, le trou pénétrant étant situé entre les trous de fixation (15).

11. Montage de poignée de frein selon la revendication 8, le trou pénétrant étant situé entre les trous de fixation (15).

12. Montage de poignée de frein selon la revendication 9, le trou pénétrant étant situé entre les trous de fixation (15).
